# EUROPÄISCHE PATENTSCHRIFT

(11) **EP 1 910 719 B1**
(45) Veröffentlichungstag und Bekanntmachung des Hinweises auf die Patenterteilung: **26.08.2009**
(21) Anmeldenummer: 06776365.6
(22) Anmeldetag: 24.07.2006
(51) Int. Cl.: F16J 15/34, F16J 15/16, F16J 15/00

(54) **GLEITRINGDICHTUNG**
SLIDE RING SEAL
BAGUE D'ETANCHEITE GLISSANTE

(30) Priorität: 29.07.2005 DE 102005036338
(43) Veröffentlichungstag der Anmeldung: 16.04.2008
(73) Patentinhaber: WILO SE, 44263 Dortmund (DE)
(72) Erfinder: HAGEN, Klaus, 95028 Hof (DE); NETSCH, Volker, 81241 München (DE); HUSTER, Bernd, 95213 Münchberg (DE)
(74) Vertreter: Borkowski, Jens
(86) Internationale Anmeldenummer: PCT/EP2006/007253
(87) Internationale Veröffentlichungsnummer: WO 2007/014666

(56) Entgegenhaltungen:
- EP-A- 1 526 316
- EP-A2- 1 087 144
- EP-A2- 1 253 359
- DE-U1- 20 217 585
- GB-A- 618 347
- GB-A- 920 892
- US-A- 3 503 469
- US-A- 5 865 441
- US-A1- 3 152 807
- US-A1- 4 175 755

## Beschreibung

Die Erfindung betrifft eine Gleitringdichtung umfassend einen Gegenring, der gedichtet fest mit einer drehbaren Welle verbindbar ist und zwei Gleitringe, zwischen denen der Gegenring koaxial angeordnet ist, wobei an den Ringen Gleitflächen angeordnet sind, so dass die Ringe zueinander gedichtet rotieren können und wobei Gegenring und Gleitringe von einer ringförmigen zu den Ringen koaxial angeordneten Kassette abgedeckt sind, deren Rotation gegenüber den Ringen durch eine Verdrehsicherung verhindert ist.

Derartige Gleitringdichtungen, die als Kassetten-Gleitringdichtungen ausgeführt sind, sind im Stand der Technik, z.B. aus der EP-A-1 526 316, allgemein bekannt, um ein feststehendes Element gegenüber einem rotierenden Element, üblicherweise eine Welle, zu dichten. Ein typisches Anwendungsgebiet besteht bei Pumpen, mit denen eine Flüssigkeit gefördert werden soll. Eine Gleitringdichtung wird beispielsweise an der Stelle eingesetzt, wo die Welle zum Antrieb eines Pumpenlaufrades, welches mit einer zu fördernden Flüssigkeit in Kontakt steht, gedichtet in das Gehäuse der Pumpe geführt werden soll. Bei einer Gleitringdichtung gibt es demnach immer eine mit einem Fördermedium in Kontakt stehende Seite.

Gleitringdichtungen werden üblicherweise derart konstruiert, dass ein so genannter Gegenring fest und insbesondere gedichtet mit einer rotierbaren Welle verbunden wird. Hierbei ergibt sich die Dichtung zwischen Welle und diesem Gegenring z.B. vermittels wenigstens einer ringförmigen Dichtmanschette, die im Gegenring angeordnet ist.

Ein solcher Gegenring kann nun zwischen zwei so genannten Gleitringen angeordnet werden, wobei ein Gleitring mit dem Gegenring über eine Gleitfläche in Kontakt steht. Diese Gleitfläche ermöglicht eine gedichtete Anlage vom Gleitring am Gegenring und gleichzeitig eine Rotation dieser Elemente zueinander. Dementsprechende muss die Materialwahl für diese Ringe ausfallen. Üblicherweise wird dabei für die Gleitringe und auch die Gegenringe als Material Siliziumkarbid gewählt, welches hervorragende Laufeigenschaften aufweist, jedoch den Nachteil hat, sehr spröde und damit bruchanfällig zu sein.

So ergibt sich bei derartigen Gleitringdichtungen üblicherweise ein Leckageproblem im Bereich einer Dichtmanschette, die für die Dichtung zwischen Gegenring und Welle Sorge tragen soll oder aber bei den Ringen aus dem sehr spröden und damit bruchanfälligen Material, wie z.B. Siliziumkarbid.

Ist beispielsweise eine Dichtmanschette am Gegenring defekt, so kann Flüssigkeit in axialer Richtung an der Welle vorbei die Gleitringdichtung passieren und beispielsweise in den Motorraum einer Pumpe gelangen und hier zu einer Schädigung führen, noch bevor ein derartiges Leck entdeckt wird. Darüber hinaus kann auch ein Bruch einer der Ringe, insbesondere des Gegenrings oder eines darin eingefügten Ringes, z.B. aus Silizium-Karbid, zu einer Leckage führen, bei der Flüssigkeit durch eine Gleitringdichtung hindurch dringen kann.

Ringe, insbesondere wenn sie aus sehr spröden Material wie z.B. Siliziumkarbid gefertigt sind, können z.B. brechen aufgrund von Verkantungen oder aber auch durch insbesondere punktuelle Belastung, insbesondere beim Anlaufen eines Motors, beispielsweise wenn die Ringe in einen Anschlag gegenüber einer Kassette laufen, um zu gewährleisten, dass die Einheit aus Gleitringen und umgebener Kassette sich gemeinsam gegenüber dem Gegenring verdreht. Gerade im Bereich dieser Verdrehsicherungen kann es zu hohen punktuellen Belastungen des Ring-Materials und somit auch zu einer Schädigung des Materials kommen.

Aufgabe der Erfindung ist es, eine neu gestaltete Gleitringdichtung, insbesondere Kassetten-Gleitringdichtung bereitzustellen, die bevorzugt eine geringere Anfälligkeit, insbesondere gegen Materialbruch, aufweist und, welche die Möglichkeit bietet, eine Leckage festzustellen, noch bevor das Fluid von einer Mediumseite zur trockenen Seite gelangen und dort eine Schädigung hervorrufen kann und/oder eine Leckage zu verhindern.

Gemäß einem Aspekt kann diese Aufgabe dadurch gelöst werden, dass im Gegenring wenigstens ein sich insbesondere in radialer Richtung erstreckender Kanal angeordnet ist, dessen eine Mündungsöffnung zur Welle weist und dessen andere Mündungsöffnung mit einer Sperrkammer in Fluidverbindung steht.

Für den Fall einer Undichtigkeit zwischen Gegenring und Welle, also im Wesentlichen in axialer Richtung kann so entweder sichergestellt werden, dass Leckagefluid durch den Kanal im Gegenring abgeleitet wird und sich so nicht in axialer Richtung durch die Gleitringdichtung hindurch ausbreiten kann und/oder dass Leckagefluid am Durchtritt durch die Dichtung dadurch gehindert wird, dass eine in Fluidverbindung mit dem Kanal stehende Sperrkammer unter Druck gesetzt ist und so mittels des Sperrfluids in der Sperrkammer das Leckagefluid zurückgedrängt wird. In beiden Fällen kann so ein Durchtritt des Leckagefluids, also z.B. des von einer Pumpe geförderten Fluids verhindert werden.

Die Form und insbesondere der Querschnitt eines solchen genannten Kanales ist beliebig. In einfacher Weise kann ein Kanal als Bohrung mit rundem Querschnitt ausgeführt sein. Bevorzugt sind mehrere Kanäle vorgesehen, z.B. orientiert unter gleichmäßiger Winkelteilung um die Welle herum.

In einer bevorzugten Weiterbildung kann eine zur Welle weisende Mündungsöffnung des wenigstens einen Kanales in einem Bereich zwischen zwei koaxial hintereinander angeordneten Dichtmanschettenl-ringen im Gegenring angeordnet ist.

Insbesondere durch diese Ausführung einer Gleitringdichtung mit zwei oder mehr koaxial hintereinander insbesondere mit einem Abstand angeordneten Dichtmanschetten/-ringen im Gegenring, die jeweils den Gegenring zur Welle dichten, wird sichergestellt, dass bei Verlust der Dichtfunktion einer von wenigstens zwei Dichtmanschetten/-ringen das Fluid, welches in axialer Richtung die fehlerhafte Dichtung durchläuft, in den Öffnungsbereich wenigstens eines Kanals zwischen zwei Dichtmanschetten/-ringen gelangt und sodann durch den Kanal in den Sperraum oder einen damit verbundnen Innenraum der Kassettengleitringdichtung gelangt bzw. durch unter Druck stehendes Sperrfluid zurückdrängt wird.

Durch diese Maßnahme wird auch eine Redundanz bei der Dichtung des Gegenringes gegenüber einer Welle erreicht, da nunmehr wenigstens zwei Dichtmanschetten/-ringe eingesetzt werden. Kommt es zu einer Ermüdungserscheinung, die zur einer Undichtigkeit bei einer der Dichtungsmanschetten/-ringe führen kann, so erfolgt eine Dichtung nach wie vor aufgrund der wenigstens einen weiteren Dichtmanschette, so dass eine axiale Undichtigkeit weiterhin vermieden wird. Hier kann es gegebenenfalls vorgesehen sein, mehr als zwei Dichtmanschetten/-ringe im Bereich der Dichtfläche zwischen Gegenring und Welle einzusetzen.

Jede dieser einzelnen Dichtmanschetten/-ringe kann beispielsweise innen im Gleitring in einer dafür vorgesehenen Ringnut aufgenommen sein und nach innen etwas über die innere Begrenzung des Gegenringes hinausragen. Wird demnach eine Gleitringdichtung mit einem solchen Gegenring auf die hierfür vorgesehene Stufe an einer Welle aufgesetzt, so werden die Manschetten/Ringe radial zusammengepresst und bilden einen dichten, insbesondere verdrehsicheren Sitz des Gegenringes auf der Welle. Eine Befestigung und Verdrehsicherung des Gegenringes kann noch durch weitere Maßnahmen unterstützt werden, die dem Fachmann auf diesem Gebiet geläufig sind.

In einer bevorzugten Weiterbildung kann es vorgesehen sein, dass eine Gleitringdichtung der erfindungsgemäßen Art eine Sensorik umfasst, mit der eine Undichtigkeit der Gleitringdichtung, insbesondere im Bereich des Gegenringes, detektierbar ist, insbesondere so, dass eine Leckage in axialer Richtung bei Defekt der produktseitigen Manschette durch den Kanal detektierbar ist.

Hierbei kann die Sensorik so ausgelegt sein, dass sie gerade auf das Fluid, welches mittels der Gleitringdichtung gegenüber einer Umgebung gedichtet werden soll, reagiert. Z.B. kann bei Wasser oder vielen anderen Flüssigkeiten die Sensorik eine elektrische Leitfähigkeit feststellen, wenn ein solches Fluid mit der Sensorik in Kontakt kommt. Ein Sensor kann so z.B. durch Elektroden ausgebildet sein. Ebenso besteht die Möglichkeit, andere auf das jeweilige Fluid angepasste Sensoren in einer derartigen Gleitringdichtung anzuordnen. So kann eine Leckage schon früh festgestellt werden, insbesondere bevor das Fluid durch die Gleitringdichtung hindurchdringt.

In bevorzugter Weiterbildung kann wenigstens ein Sensor der Sensorik in einer Sperrkammer und/oder Verbindungsbereichen zu einer Sperrkammer angeordnet sein, mittels dem das Vorhandensein von Fluid, insbesondere Förderfluid einer Pumpe, detektierbar ist. Hierbei kann es vorgesehen sein, dass die Sperrkammer und/oder Verbindungsbereiche zur Sperrkammer mit einem Sperrfluid gefüllt ist/sind, insbesondere mit medizinischem Weissöl oder einer rückstandsfrei verdampfenden, nicht oxidierenden Flüssigkeit.

So ist in einem solchen Fall ein Sensor unempfindlich gegen das verwendete Sperrfluid, wird dieses jedoch mit Leckagefluid durchsetzt, so erfolgt eine Detektion und es können Wartungsmaßnahmen eingeleitet werden. Bevorzugt kann es vorgesehen sein, dass das Sperrfluid austauschbar ist.

Häufig ist ein Gegenring, der verdrehsicher fest auf einer Welle angeordnet ist, vollständig aus einem geeigneten Material, wie beispielsweise Siliziumkarbid gefertigt, so dass die Gefahr besteht, dass bei einer Schädigung des Materials, beispielsweise durch Bruch, sich dieses grundsätzlich vollständig auf den Ring in seiner Gesamtheit auswirkt und so zu einer Leckage führen kann. Ebenso ist es bekannt, dass ein Gleitring über wenigstens einen Auflagering am Gegenring anliegen kann, insbesondere wobei ein Auflagering in eine am Gegenring insbesondere in axialer Richtung offenen ringförmigen Ausnehmung eingefügt ist.

Mittels dieser Maßnahme können Gleitring und Auflagering jeweils hinsichtlich ihres Materials optimal aufeinander abgestimmt sein, um optimale Dichtigkeit, Haltbarkeit und Rotierbarkeit zueinander zu gewährleisten, wobei der Gegenring, in dem die beiden Auflageringe (zu jedem Gleitring wenigstens einer) fest angeordnet sind, aus einem anderen Material gefertigt sein kann, welches eine höhere Widerstandsfähigkeit aufweist gegenüber Belastungen.

So kann beispielsweise der Gegenring bei dieser erfindungsgemäßen Konstruktion aus Metall ausgefertigt sein, wobei die Auflageringe z.B. aus Siliziumkarbid oder einem anderen geeigneten Material gefertigt sind, welches bekanntermaßen hervorragende Eigenschaften bezüglich Dichtigkeit und Rotierbarkeit aufweist. Ein solcher Gegenring bildet somit mit den Auflageringen eine Einheit.

Wichtig ist bei dieser Konstruktion, dass ein Auflagering dicht und auch fest im Gegenring angeordnet ist. Dies kann durch dem Fachmann bekannte Maßnahmen, beispielsweise durch eine Verklebung oder Aufschrumpfen erfolgen. Hierbei kann weiterhin bevorzugt die Aufnahmenut, in die ein Auflagering am Gegenring eingelegt wird, in ihrer Breite leicht größer ausgestaltet sein, als die radiale Dicke des Auflageringes, um so zu gewährleisten, dass dieser spannungsfrei im Gegenring zu liegen kommt.

Diese Konstruktion weist den Vorteil auf, dass bei einer mechanischen Beanspruchung und einem eventuellen Bruch des Auflageringes nicht gleich vollständig der gesamte Gegenring beschädigt wird, sondern dieser weiterhin sicher und fest auf der Welle verbleibt und somit eine Leckage in axialer Richtung weiterhin wirkungsvoll verhindert wird.

Es kann hierbei lediglich zu einer Leckage im wesentlichen in radialer Richtung, d.h. im wesentlichen parallel zur Gleitfläche zwischen Gleitring und Auflagering kommen, so dass eventuelle Leckflüssigkeit zunächst in die Gleitringdichtung bzw. in die Kassette bzw. die Sperrkammer oder damit verbundene Bereich der Gleitringdichtung eindringt und dort weiterhin zurückgehalten wird, durch Sperrfluid zurückgedrängt wird und/oder durch eine Sensorik festgestellt wird.

Dies erfolgt besonders vorteilhaft dann, wenn ein Auflagering wenigstens zum Teil an die Sperrkammer und/oder Verbindungsbereiche zur Sperrkammer angrenzt, so dass bei einer Leckage das Leckfluid unmittelbar in diese Bereiche eindringt.

Es kann vorgesehen sein, dass eine Sperrkammer in radialer Richtung wenigstens hinter einem der Ringe, d.h. hinter einem der Gleitringe oder hinter dem Gegenring angeordnet ist, wobei in einer besonderen bevorzugten Ausführung die Sperrkammer selbst ringförmig ausgebildet sein kann und sodann wenigstens einen dieser Ringe, gegebenenfalls alle Ringe der Gleitringdichtung koaxial umgibt. So wird sichergestellt, dass bei einer eventuellen Leckage zwischen den Ringen im Dicht- bzw. Gleitbereich eventuell durchtretendes Fluid in die Sperrkammer gelangen und dort detektiert werden kann.

Eine derartige Sperrkammer lässt sich konstruktiv besonders einfach bei einer so genannten Kassettengleitringdichtung realisieren, bei der Gegenring und Gleitringe von einer ringförmigen zu den Ringen koaxial angeordneten Kassette abgedeckt, insbesondere überdeckt sind, insbesondere wobei die Kassette mit radial innen liegenden Flächen an radial außen liegenden Flächen der Gleitringe gedichtet anliegt. Hierdurch wird erreicht, dass die Gesamtanordnung aus Kassette und Gleit- bzw. Gegenring eine in sich dichte Einheit bildet, die auf eine Welle aufgeschoben werden kann. Hierbei ist es fertigungstechnisch besonders vorteilhaft, wenn die Kassette in axialer Richtung, insbesondere symmetrisch zweigeteilt ist und somit als zwei Teilkassetten über die Gleitringe gelegt und sodann untereinander verbunden werden kann. Dies kann durch dafür vorgesehene Spannstifte erfolgen.

In einer bevorzugten Variante einer derartigen Gleitringdichtung bildet die Anordnung aus Kassette und den Ringen einen umschlossenen ringförmigen Innenraum innerhalb dieser Gleitringdichtung, der entweder selbst die Sperrkammer ausbilden kann oder der, insbesondere über wenigstens eine Bohrung in der Kassette mit einer z.B. darum angeordneten Sperrkammer in Verbindung steht.

Für den Fall, dass der gebildete ringförmige Innenraum nicht selbst schon die Sperrkammer bilden soll, kann eine insbesondere ringförmige Sperrkammer gedichtet an einer radial außen liegenden Fläche dieser Kassette angeordnet sein, z.B. durch Verschraubung.

Bei einer derart ausgebildeten Gleitringdichtung wird demnach bei einem eventuellen Bruch einer der Auflageringe zwischen Gleitringe und Gegenring oder bei einer Undichtigkeit im Bereich einer Dichtung/Manschette zwischen Gegenring und Welle das Fluid zunächst durch einen Auflagering oder durch einen erfindungsgemäßen Kanal in den Innenraum der gebildeten Kassettengleitringdichtung eindringen und entweder dort direkt im Innenraum detektiert werden, oder aber das Fluid kann durch Verbindungen von dem Innenraum durch die äußere Wandung der Kassette in eine dahinter liegende Sperrkammer eindringen.

Für eine bessere Wärmeabfuhr, insbesondere im Bereich der Gleitflächen, kann die Gleitringdichtung ergänzend eine Fördervorrichtung für Sperrfluid aufweisen, insbesondere durch Lamellen/Schaufeln (16), die radial vorstehend und insbesondere axial ausgerichtet am Gegenring (10) angeordnet und von Sperrfluid umgeben sind. Durch den verbesserten Wärmetransport an den Gleitflächen kann ein geringerer Verschteiß bewirkt werden.

Weiterhin bildet die Gleitringdichtung in sich eine abgeschlossene dichte Einheit, so dass zumindest bei Leckage die Gesamtdichtigkeit weiterhin erhalten bleibt, das Leck jedoch detektierbar ist, so dass die Vorrichtung, in der eine solche Gleitringdichtung zum Einsatz kommt, einer Wartung unterzogen werden kann.

So wird mit allen vorbeschriebenen Ausführungen insbesondere bei einer besonders bevorzugten Kombination aller dieser Ausführungen, gegebenenfalls aber auch schon bei alleinigem Einsatz, der wesentliche Vorteil erreicht, dass neben einer Redundanz aufgrund der Verdopplung der relevanten Teile gleichzeitig auch eine sichere Detektion aller möglichen bzw. der höchst wahrscheinlichen Leckagen erfolgen kann.

Bei sämtlichen vorgenannten Alternativen oder kumulativ miteinander zu kombinierenden Ausführungen kann es vorgesehen sein, dass die Gleitringe aufgrund einer zwischen Kassette und Gleitring wirkenden Federkraft gegen den Gegenring bzw. die darin angeordneten Auflageringe gedrückt werden, insbesondere derart, dass ein axiales Spiel zwischen Kassette und den Ringen verbleibt. Hierfür kann beispielsweise eine Feder zwischen einem radial nach innen springenden Bereich einer Kassette und einem radial nach außen springenden Bereich an einem Gleitring angeordnet werden, so dass die Feder mit ihrer Achse im Wesentlichen parallel zur Achse einer Welle angeordnet ist. Axiale Wellenbewegungen, insbesondere beim Starten eines Elektromotors können so abgefangen werden.

Darüber hinaus kann eine Gleitringdichtung in ihren Elementen, insbesondere zwischen Kassette und Gleitringen in Winkeln zur Drehachse verkanten, wodurch gerade bei vorgesehenen und bekannten Verdrehsicherungen mitunter hohe punktuell belastende Beanspruchungen in dem zum Teil spröden Material der Gleitringe entstehen.

So ist es im Stand der Technik beispielsweise bekannt, eine Verdrehsicherung dadurch zu erreichen, dass axial ausgerichtete Stifte an einer Kassette angeordnet sind und mit einem Anschlag an einem Gleitring zusammenwirken, um eine Rotation dieser Elemente zu einander zu verhindern. Zwischen der Oberfläche eines derartigen axial ausgerichteten Stiftes und einem Anschlag am Gleitring kann es jedoch nur zu einem linienförmigen, bei einer Verkantung sogar nur zu einem punktuellen Kontakt kommen, so dass hier die Belastungen insbesondere beim Starten eines Motors besonders hoch sind und demnach zu Schädigungen führen können.

Um hier eine höhere Sicherheit zu gewährleisten, kann es gemäß einem ersten Aspekt, die Aufgabe zu lösen, in einer erfindungsgemäßen Bauform einer Gleitringdichtung der vorgenannten gattungsgemäßen Art, bei der Gegenring und Gleitringe von einer ringförmigen zu den Ringen koaxial angeordneten Kassette abgedeckt sind, insbesondere überdeckt sind und deren Rotation gegenüber den Ringen durch eine Verdrehsicherung verhindert ist, vorgesehen sein, dass die Verdrehsicherung wenigstens einen Stift umfasst, an dem ein Anschlagelement mit einer Anschlagfläche verdrehbar angeordnet ist, wobei die Anschlagfläche mit einem flächigen Gegenanschlag zusammenwirkt. Eine solche Gleitringdichtung kann hinsichtlich ihrer Merkmale auch mit allen vorgenannten Ausführungen kombinierbar sein.

Hierdurch wird besonders vorteilhaft erreicht, dass zum einen der Gegenanschlag in jedem Fall flächig ist und dass zum anderen aufgrund der Verdrehbarkeit des Anschlagelementes an einem Stift sich dessen Anschlagfläche immer automatisch bei einer Kontaktierung mit dem Gegenanschlag ausrichtet, so dass ein flächiger Kontakt zwischen Anschlag und Gegenanschlag entsteht. Hierdurch ergibt sich eine geringere Belastung und es kommt somit zu weniger Schäden. Hierbei kann es vorgesehen sein, dass die Verdrehbarkeit nur in einem bestimmten Winkelbereich möglich ist. Eine Verdrehbarkeit ist bevorzugt immer kleiner 360 Grad und z.B. durch umgebende Bauelement begrenzt.

In einer ersten Ausführung kann es dabei vorgesehen sein, dass der Stift insbesondere senkrecht zur axialen Richtung der Gleitringdichtung, an der Kassette befestigt ist und ein Gegenanschlag an einem Gleitring angeordnet ist, insbesondere an einem radial nach außen weisenden Vorsprung dieses Gleitringes, wobei dieser Vorsprung eine Gegenanschlagfläche aufweist. Durch die konstruktive Ausgestaltung, dass der Stift beispielsweise senkrecht zur axialen Richtung der Gleitringdichtung ausgerichtet ist und das Anschlagelement mit seiner Anschlagfläche um die Achsrichtung des Stiftes rotieren kann, wird sichergestellt, dass selbst bei Verkantungen in einem Winkel zur Drehachse der Gleitringdichtung ein flächiger Kontakt erreicht wird.

Axiale Bewegungen zwischen Kassette und den Ringen sind darüber hinaus weiterhin unproblematisch, da bei dieser Anordnung die Flächen des Anschlagelementes und des Gegenanschlages parallel zueinander ausgerichtet sind und die Flächen somit in Achsrichtung übereinander gleiten können.

In kinematischer Umkehr der oben genannten Ausführung kann es alternativ ebenso vorgesehen sein, dass der Stift insbesondere senkrecht zur axialen Richtung der Gleitringdichtung, an einem Gleitring befestigt ist und ein Gegenanschlag an der Kassette angeordnet ist, insbesondere an einem radial nach innen weisenden Vorsprung, der eine Gegenanschlagfläche aufweist.

Wesentlicher Gesichtspunkt für die vorteilhafte Ausgestaltung ist es, dass einer der beiden Anschläge, d.h. entweder die Anschlagfläche des vorgenannten Anschlagelementes oder aber auch die Anlagefläche des vorgenannten Gegenanschlages relativ zu dem Bauteil, an dem der Anschlag befestigt ist zumindest in Grenzen beweglich ist, um sich so bei einer eventuellen Verkantung gegenüber dem jeweils anderen Anschlag ausrichten zu können. Dies wird wie vorgenannt bevorzugt mittels einer Verdrehung um die Stiftachse erreicht.

In einer besonders vorteilhaften konstruktiv einfachen Ausgestaltung kann hierfür ein Stift beispielsweise als Außengewindestift ausgebildet sein und ein Anschlagelement als Mehrkantmutter mit Innengewinde. Dementsprechend kann die Mehrkantmutter auf dem Stift aufgeschraubt sein, wobei die Mehrkantmutter auf ihrer Außenseite mehrere der Kantenanzahl entsprechende Flächen aufweist, die gemäß der Rotationsmöglichkeit der Mehrkantmutter um die Achse des Stiftes zumindest in einer Dimension ausrichtbar sind, um sich so gegenüber dem jeweils anderen Anschlag anzupassen.

Bei einer Ausbildung des Gegenanschlags im Gegenring kann der Gegenring z.B. einen in radialer Richtung vorstehenden Kragen aufweisen, der einen Schlitz oder eine Nut in axialer Richtung aufweist, wobei die Schlitz- bzw, Nutbreite derart bemessen ist, dass das Anschlagelement darin einliegen kann. Hierdurch und auch durch entsprechend geringe Beabstandung eines drehbaren Anschlagelementes kann eine Winkelbegrenzung der Verdrehbarkeit erreicht werden.

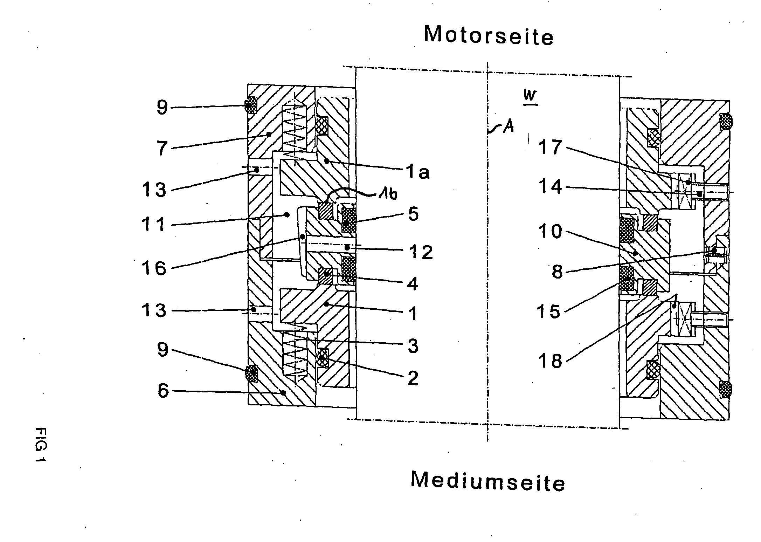

Ein Ausführungsbeispiel der Erfindung ist in der nachfolgend diskutierten Fig. 1 dargestellt.

Die Fig. 1 zeigt im Schnitt eine Kassengleitringdichtung, die in diesem Beispiel auf eine Welle W aufgeschoben ist, die um eine Achse A rotieren kann. Die Gleitringdichtung kontaktiert mit einem Gegenring 10 die Oberfläche der Welle W derart, dass der Gegenring 10 drehfest und gedichtet mit dieser Welle W verbunden ist. Hierbei wird die Dichtung zwischen Gegenring 10 und Welle W mittels zwei beabstandet zueinander und koaxial hintereinander angeordneten Dichtmanschetten 5 erreicht, die z.B. aus einem elastomeren Material bestehen können.

Der Gegenring 10 ist zwischen zwei Gleitringen 1 und 1a angeordnet, die mit ihren Gleitflächen 1b den Gegenring 10 an Auflageringen 4 kontaktieren, wobei diese Auflagenringe 4 jeweils in dem Gegenring 10 in Nute eingefügt z.B. eingeschrumpft sind, die in axialer Richtung offenen sind.

Dabei sind wie hier erkennbar die jeweiligen Nute leicht größer als die radiale Dicke eines Auflagenrings 4, um zu gewährleisten, dass diese Ringe spannungsfrei in die Ausnehmungen eingefügt werden können.

Es ist hier weiterhin in dieser Ausführung zu erkennen, dass die Gleitringe 1 und 1a sowie der Gegenring 14 von einer koaxial angeordneten Kassette aus den beiden Kassettenhälften 6, 7 überdeckt wird, so dass sich im Inneren dieser Gesamtanordnung ein Innenraum 11 ergibt.

Zwischen radial nach außen vorspringenden Elementen am jeweiligen Gleitring 1, 1a und radial nach innen vorspringenden Elementen (jeweils z.B. um die Welle laufende Kragen) an den Kassettenhälften 6, 7 ist eine Feder 3 angeordnet, über die ein jeweiliger Gleitring 1 in axialer Richtung auf einen Gegenring bzw. auf dessen zugeordneten Auflagering 4 aufgepresst wird, um so einen dichten Sitz an der Gleitfläche 1b zu gewährleisten. Hierbei sind die beiden Kassettenhälften 6, 7, die mittels eines Spannstiftes 8 untereinander befestigbar sind, über eine O-Ringdichtung 2, dessen zugehörige Aufnahmenut in einem äußeren Flächenbereich der Gleitringe angeordnet ist, zum jeweiligen Gleitring gedichtet.

Die hier in der Fig. 1 dargestellte Kassettengleitringdichtung hat den besonderen Vorteil, einerseits einer Redundanz aufgrund der zweifachen Anordnung von Dichtmanschetten 5 und der Realisation von Auflageringen 4 am Gegenring 10.

Hier kann beispielsweise der Gegenring 10 aus Metall gefertigt sein, wobei die Auflageringe 4 aus Siliziumkarbid bestehen können oder einem anderen gleitfähigen Material, welches mit dem Material der Gleitringe 1, 1a, welches ebenfalls Siliziumkarbid sein kann, besonders gut zusammenwirkt.

Betrachtet man nun die möglichen Schadensfälle, so wird es üblicherweise bei einem Ausfall bei den Manschettendichtungen 5 nicht zu einem simultanen Ausfall beider hier vorgesehener Manschetten 5 kommen, sondern lediglich zu dem Ausfall einer dieser beiden Dichtungen 5. Es bleibt demnach aufgrund der weiterhin unversehrten anderen Dichtung gesichert, dass keinerlei Flüssigkeit in axialer Richtung an der Welle vorbei unter den Gegenring 10 hindurchkriechen kann.

Um hier die Möglichkeit einer Detektion eines solchen Lecks zu schaffen, ist es vorgesehen, dass der Gegenring 10 einen Kanal 12 aufweist, der sich hier in radialer Richtung erstreckt und der zum einen in dem Bereich zwischen den Manschetten mündet und zum anderen im Innenraum 11. Flüssigkeit, die demnach aufgrund eines Lecks im Bereich einer Dichtmanschette 5 den Gegenring unterkriecht, wird somit durch den Kanal 12 in den Innenraum 11 geleitet, wobei gegebenenfalls bereits im Innenraum 11 eine Sensorik angeordnet sein kann, um diese Flüssigkeit zu detektieren. Auch kann der Innenraum 11 unter Druck mit einem Sperrfluid stehen und so das Leckagefluid zurückdrängen.

Es kann darüber hinaus hier auch vorgesehen sein, dass wie hier angedeutet die beiden Kassettenhälften 6, 7 jeweils Bohrungen 13 in radialer Richtung aufweisen, über die der Innenraum 11 verbunden werden kann mit einem weiteren Ringelement, welches über die O-Ringe 9 dicht auf der Außenseite der Kassette 6, 7 befestigt wird und eine Sperrkammer im Sinne der vorbeschriebenen Erfindung ausbildet. So kann auch in dieser Sperrkammer die Sensorik zur Detektion von Leckageflüssigkeit untergebracht sein, wobei es hier vorgesehen sein kann, dass die gesamten Innenräume, d.h. Sperrkammer, verbundene Kanäle 13, Innenraum 11 und Kanal 12 mit einer anderen Sperrflüssigkeit als das Medium, gegen welches gedichtet wird, gefüllt sind. Hierbei kann es sich z.B. um Öl oder auch reines Wasser handeln.

In einem anderen Leckagefall kann beispielsweise ein Auflagering 4 aufgrund seiner spröden Eigenschaften, beispielsweise bei Ausbildung aus Siliziumkarbid, brechen. Sollte dies gegebenenfalls der Fall sein, so wird der Bruch eines solchen Ringes 4 sich aufgrund der Materialtrennung nicht auch auf den weiteren Ring 4 ausdehnen und auch nicht auf den Gegenring 10, da alle diese Bauteile unabhängig voneinander, jedoch miteinander verbunden sind.

Bei einem Bruch oder einer Leckage bei einem dieser Ringe 4 kann demnach ebenfalls keine Leckageflüssigkeit in axialer Richtung die Gleitringdichtung durchwandern, sondern es wird vielmehr Leckageflüssigkeit durch den schadhaften Auflagering 4 im wesentlichen in radialer Richtung wiederum in den Innenraum 11 gelangen und dort unmittelbar detektiert werden oder aber nach Weiterleitung mittels der Kanäle 13 innerhalb der vorgesehenen, jedoch hier nicht dargestellten Sperrkammer.

So bleibt sichergestellt, dass bei den am wahrscheinlichsten auftretenden Leckagefällen aufgrund der erhöhten Redundanz die Gleitringdichtung in ihrer Einheit weiterhin dicht bleibt und andererseits auch eine Feststellung der Leckage erfolgen kann, noch bevor eine Schädigung der Vorrichtung erfolgt, an der die Gleitringdichtung zum Einsatz kommt.

Am Gegenring 10 können auf einer Seite, die in die Innenkammer 11 weist radial vorstehende und insbesondere im wesentlichen axial ausgerichtete Lamellen 16 angeordnet sein, die eine Rückenbeschaufelung des Gegenringes 10 bilden und das Fluid in der Innenkammer bzw. der Sperrkammer in Bewegung setzen. Die Lamellen können dabei schaufelartig geschwungen sein. Hierdurch kann ein schnellerer Wärmetransport, insbesondere im Bereich der Gleitflächen, erreicht werden und dadurch ein geringerer Verschleiß.

Die Fig. 1 zeigt eine erfindungsgemäße Ausgestaltung einer Verdrehsicherung, die zur Realisierung hier in jeder Hälfte der Kassette 6, 7 angeordnet ist, um zu verhindern, dass jeder der beiden Gleitringe 1, 1a sich gegenüber der Kassette verdrehen kann. Somit wird sich bei Einsatz dieser Verdrehsicherung jeweils die Gesamteinheit aus Gleitringen und Kassette gegenüber dem Gegenring drehen.

Um dies hier zu erreichen, sind Gewindestifte 14 in radialer Richtung und damit im wesentlichen senkrecht zur Drehachse A innenseitig in der Kassette angeordnet, so dass die Enden innerhalb des Innenraumes 11 zu liegen kommen. Auf dem innenseitigen Ende eines solchen Gewindestiftes 14 ist eine Mehrkant-, hier Vierkantmutter 17 aufgeschraubt, die aufgrund des Gewindeeingriffs auf dem Stift 14 axial gesichert ist, sich jedoch um die Achse des Stiftes 14 zumindest in einem Winkelbereich drehen kann und mit einer an einem radial nach außen weisenden Vorsprung an einem jeweiligen Gleitring angeordneten Gegenanschlag 18 flächig zusammenwirkt.

Hierdurch wird erreicht, dass bei einer gegebenenfalls vorkommenden Verkantung der Ringanordnung um einen Winkel zur Drehachse A außerhalb der hier betrachteten Blattebene weiterhin die beiden Anschlagbereiche, d.h. die Fläche einer Mutter 17 und der jeweilige Gegenanschlag 18 flächig aufeinander liegen und somit Belastungsspitzen verhindert werden.

Sämtliche Maßnahmen der hier vorgeschlagenen Erfindung tragen demnach zu einer erhöhten Sicherheit, längerer Standzeit und einer besseren Wartungsmöglichkeit bei.

## Patentansprüche

1. Gleitringdichtung, umfassend einen Gegenring (10), der gedichtet fest mit einer drehbaren Welle W verbindbar ist und zwei Gleitringe (1, 1A), zwischen denen der Gegenring (10) koaxial angeordnet ist, wobei an den Ringen Gleitflächen angeordnet sind, so dass die Ringe zueinander gedichtet rotieren können, und wobei Gegenring (10) und Gleitringe (1, 1A) von einer ringförmigen zu den Ringen koaxial angeordneten Kassette abgedeckt sind, deren Rotation gegenüber den Ringen durch eine Verdrehsicherung verhindert ist, **dadurch gekennzeichnet, dass** die Verdrehsicherung wenigstens einen Stift (14) umfasst, an dem ein Anschlagelement (17) mit einer Anschlagfläche verdrehbar angeordnet ist, wobei die Anschlagfläche mit einem flächigen Gegenanschlag (18) zusammenwirkt.

2. Gleitringdichtung nach Anspruch 1, **dadurch gekennzeichnet, dass** der Stift (14) insbesondere senkrecht zur axialen Richtung der Gleitringdichtung, an der Kassette (6,7) befestigt ist und ein Gegenanschlag (18) an einem Gleitring (1,1 a) angeordnet ist, insbesondere an einem radial nach aussen weisenden Vorsprung, der eine Gegenanschlagfläche (18) aufweist,

3. Gleitringdichtung nach Anspruch 1, **dadurch gekennzeichnet, dass** der Stift insbesondere senkrecht zur axialen Richtung der Gleitringdichtung, an einem Gleitring befestigt ist und ein Gegenanschlag an der Kassette angeordnet ist, insbesondere an einem radial nach innen weisenden Vorsprung, der eine Gegenanschlagfläche aufweist.

4. Gleitringdichtung nach einem der vorherigen Ansprüche, **dadurch gekennzeichnet, dass** ein Stift (14) als Außengewindestift und ein Anschlagelement als Mehrkantmutter (17) mit Innengewinde ausgebildet ist, wobei die Mehrkantmutter (17) auf dem Stift (14) aufgeschraubt ist.

5. Gleitringdichtung nach einem der vorherigen Ansprüche, **dadurch gekennzeichnet, dass** im Gegenring (10) wenigstens ein sich insbesondere in radialer Richtung erstreckender Kanal (12) angeordnet ist, dessen eine Mündungsöffnung zur Welle (W) weist und dessen andere Mündungsöffnung mit einer Sperrkammer in Fluidverbindung steht.

6. Gleitringdichtung nach Anspruch 5, **dadurch gekennzeichnet, dass** die zur Welle (W) weisende Mündungsöffnung in einem Bereich zwischen zwei koaxial hintereinander angeordneten Dichtmanschetten/-ringen (5) im Gegenring (10) angeordnet ist.

7. Gleitringdichtung nach einem der vorherigen Ansprüche 5 oder 6, **dadurch gekennzeichnet, dass** sie eine Sensorik umfasst, mit der eine Undichtigkeit der Gleitringdichtung, insbesondere im Bereich des Gegenringes (10), detektierbar ist, insbesondere so dass eine Leckage in axialer Richtung bei Defekt der produktseitigen Manschette/Dichtung (5) durch den Kanal (12) detektierbar ist.

8. Gleitringdichtung nach Anspruch 7, **dadurch gekennzeichnet, dass** wenigstens ein Sensor der Sensorik in der Sperrkammer und/oder Verbindungsbereichen (11) zur Sperrkammer angeordnet ist, mittels dem das Vorhandensein von Fluid, insbesondere Förderfluid einer Pumpe, detektierbar ist, insbesondere wobei die Sperrkammer und/oder Verbindungsbereiche (11) zur Sperrkammer mit einem Sperrfluid gefüllt ist/sind, insbesondere mit medizinischem Weissöl oder einer rückstandsfrei verdampfenden, nicht oxidierenden Flüssigkeit.

9. Gleitringdichtung nach einem der vorherigen Ansprüche 5 bis 8, **dadurch gekennzeichnet, dass** das Sperrfluid austauschbar ist.

10. Gleitringdichtung nach einem der vorherigen Ansprüche 5 bis 9, **dadurch gekennzeichnet, dass** ein Gleitring (1, 1a) über wenigstens einen Auflagerung (4) am Gegenring (10) anliegt, wobei ein Auflagering (4) wenigstens zum Teil an die Sperrkammer und/oder Verbindungsbereiche (11) zur Sperrkammer angrenzt.

11. Gleitringdichtung nach einem der vorherigen Ansprüche 5 bis 10, **dadurch gekennzeichnet, dass** sie eine Fördervorrichtung für Sperrfluid aufweist, insbesondere durch Lamellen/Schaufeln (16), die radiat-vorstehend und insbesondere axial ausgerichtet am Gegenring (10) angeordnet sind.

## Claims

1. Slide ring seal, comprising a counter ring (10), which may be connected in a firmly sealed way with a shaft W, which may turn, and two slide rings (1, 1A), between which the counter ring (10) is arranged coaxially, in which sliding surfaces are arranged on the rings, so that the rings may rotate in a sealed way to each other, and in which the counter ring (10) and slide rings (1, 1A) are covered by a ring-shaped case arranged coaxially to the rings, the rotation of which is prevented with reference to the rings by torsion protection, **characterised in that** the torsion protection comprises at least one pin (14), on which a stop element (17) with a stop surface is arranged, which may twist, in which the stop surface works together with a flat counter stop (18).

2. Slide ring seal according to claim 1, **characterised in that** the pin (14) is fastened to the case (6, 7), particularly perpendicular to the axial direction of the slide ring seal, and a counter stop (18) is arranged on a slide ring (1, 1a), particularly on a projection facing radially outwards, which has a counter stop surface (18).

3. Slide ring seal according to claim 1, **characterised in that** the pin is fastened to a slide ring, particularly perpendicular to the axial direction of the slide ring seal, and a counter stop is arranged on the case, particularly on a projection facing radially inwards, which has a counter stop surface.

4. Slide ring seal according to one of the previous claims, **characterised in that** a pin (14) is made as an external threaded pin and a stop element is made as a polygonal nut (17) with an internal thread, in which the polygonal nut (17) is screwed onto the pin (14).

5. Slide ring seal according to one of the previous claims, **characterised in that** in the counter ring (10) at least one channel (12) is arranged, extending particularly in a radial direction, one opening of which faces the shaft (W) and the other opening of which has a fluid connection with a sealing chamber.

6. Slide ring seal according to claim 5, **characterised in that** the opening facing the shaft (W) is arranged in an area between two sealing sleeves/rings (5) arranged coaxially one behind the other in the counter ring (10).

7. Slide ring seal according to one of the previous claims 5 or 6, **characterised in that** it comprises sensor technology, with which a leak in the slide ring seal, particularly in the area of the counter ring (10), may be detected, particularly so that a leak through the channel (12) in the axial direction may be detected, if there is a defect in the sleeve/seal (5) on the product side.

8. Slide ring seal according to claim 7, **characterised in that** at least one sensor of the sensor technology is arranged in the sealing chamber and/or connection areas (11) to the sealing chamber, by means of which the presence of fluid, particularly the conveying fluid of a pump, may be detected, particularly in which the sealing chamber and/or connection areas (11) to the sealing chamber is/are filled with a sealing fluid, particularly with medicinal white oil or a non-oxidising liquid without residue on vaporisation.

9. Slide ring seal according to one of the previous claims 5 to 8, **characterised in that** the sealing fluid may be exchanged.

10. Slide ring seal according to one of the previous claims 5 to 9, **characterised in that** a slide ring (1, 1a) is adjacent to at least one supporting ring (4) on the counter ring (10), in which a supporting ring (4) is at least partly adjacent to the sealing chamber and/or connection areas (11) to the sealing chamber.

11. Slide ring seal according to one of the previous claims 5 to 10, **characterised in that** it has a conveying device for sealing fluid, particularly by fins/vanes (16), which are arranged projecting radially and particularly aligned axially on the counter ring (10).

## Revendications

1. Bague d'étanchéité glissante, comportant une contre-bague (20) qui peut être reliée fixement et de manière étanche à un arbre rotatif (W) et deux bagues glissantes (1, 1A) entre lesquelles la contre-bague (10) est disposée de manière coaxiale, des surfaces glissantes étant disposées sur les bagues, de sorte que les bagues peuvent tourner de manière étanche l'une par rapport à l'autre, et la contre-bague (10) et les bagues glissantes (1, 1A) étant recouvertes par un caisson annulaire disposé de manière coaxiale par rapport aux bagues et dont la rotation par rapport aux bagues est empêchée par un limiteur de rotation, **caractérisée en ce que** le limiteur de rotation comporte au moins une goupille (14) sur laquelle un élément butée (17) comprenant une surface de butée est disposé de manière rotative, la surface de butée coopérant avec une contre-butée plane (18).

2. Bague d'étanchéité glissante selon la revendication 1, **caractérisée en ce que** la goupille (14) est fixée en particulier perpendiculairement à la direction axiale de la bague d'étanchéité glissante sur le caisson (6, 7) et une contre-butée (18) est disposée sur une bague glissante (1, 1a), en particulier sur une saillie orientée radialement vers l'extérieur et comprenant une surface de contre-butée (18).

3. Bague d'étanchéité glissante selon la revendication 1, **caractérisée en ce que** la goupille est fixée en particulier perpendiculairement à la direction axiale de la bague d'étanchéité glissante sur une bague glissante et une contre-butée est disposée sur le caisson, en particulier sur une saillie radialement orientée vers l'intérieur comprenant une surface de contre-butée.

4. Bague d'étanchéité glissante selon l'une quelconque des revendications précédentes, **caractérisée en ce qu'**une goupille (14) est conçue comme une goupille filetée extérieure et un élément butée est conçu comme un écrou polygonal (17) doté d'un filet intérieur, l'écrou polygonal (17) étant vissé sur la goupille (14).

5. Bague d'étanchéité glissante selon l'une quelconque des revendications précédentes, **caractérisée en ce qu'**au moins un canal (12) s'étendant en particulier dans la direction radiale et dont une ouverture d'embouchure est orientée vers l'arbre (W) et dont l'autre ouverture d'embouchure est en liaison fluidique avec une chambre de barrage est disposé dans la contre-bague (10).

6. Bague d'étanchéité glissante selon la revendication 5, **caractérisée en ce que** l'ouverture d'embouchure orientée vers l'arbre (W) est disposée dans la contre-bague (10) dans une zone située entre deux manchons/bagues d'étanchéité (5) disposés coaxialement l'un(e) derrière l'autre.

7. Bague d'étanchéité glissante selon l'une quelconque des revendications 5 ou 6, **caractérisée en ce qu'**elle comporte un système de détection permettant de détecter une perte d'étanchéité de la bague d'étanchéité glissante, en particulier dans la zone de la contre-bague (10), en particulier de sorte qu'une fuite peut être détectée dans la direction axiale à travers le canal (12) en cas de défaut du manchon/joint (5) côté produit.

8. Bague d'étanchéité glissante selon la revendication 7, **caractérisée en ce qu'**au moins un capteur du système de détection est disposé dans la chambre de barrage et/ou les zones de liaison (11) menant à la chambre de barrage et permet de détecter la présence d'un fluide, en particulier un fluide de transport d'une pompe, la chambre de barrage et/ou les zones de liaison (11) menant à la chambre de barrage étant notamment remplie(s) d'un fluide de barrage, en particulier d'une huile blanche médicale ou d'un liquide non oxydant et s'évaporant sans laisser de résidu.

9. Bague d'étanchéité glissante selon l'une quelconque des revendications 5 à 8, **caractérisée en ce que** le fluide de barrage est interchangeable.

10. Bague d'étanchéité glissante selon l'une quelconque des revendications 5 à 9, **caractérisée en ce qu'**une bague glissante (1, 1a) s'applique contre la bague d'étanchéité (10) au-dessus d'au moins une bague d'appui (4), une bague d'appui (4) étant au moins en partie adjacente à la chambre de barrage et/ou aux zones de liaison (11) menant à la chambre de barrage.

11. Bague d'étanchéité glissante selon l'une quelconque des revendications 5 à 10, **caractérisée en ce qu'**elle comprend un dispositif d'acheminement du fluide de barrage, en particulier grâce à des lamelles/pales (16) disposées radialement en saillie et notamment orientées axialement sur la contre-bague (10).
